# EUROPEAN PATENT SPECIFICATION

(11) **EP 1 140 554 B1**
(45) Date of publication and mention of the grant of the patent: **08.09.2004**
(21) Application number: 99965637.4
(22) Date of filing: 14.12.1999
(51) Int. Cl.: B60N 2/06, B62D 1/04

(54) **SEAT ARRANGEMENT FOR A MOTOR VEHICLE**
SITZANORDNUNG FÜR KRAFTFAHRZEUGE
AGENCEMENT DE SIEGES POUR VEHICULE A MOTEUR

(30) Priority: 22.12.1998 SE 9804561
(43) Date of publication of application: 10.10.2001
(73) Proprietor: Volvo Personvagnar AB, 405 03 Göteborg (SE)
(72) Inventor: BERGQUIST, Ake, S-426 77 Västra Frölunda (SE); LARSSON, Göran, S-423 54 Torslanda (SE); GUNNARSON, Anders, S-411 25 Göteborg (SE); LAMARRE, Simon, S-426 68 Västra Frölunda (SE); REIKERAS, Karin, S-413 05 Göteborg (SE); REIKERAS, Kjell, S-523 99 Hökerum (SE); LENNARTSSON, Einar, S-466 92 Sollebrunn (SE); THORSSON, Birgitta, S-432 35 Varberg (SE)
(74) Representative: Andersson, Per Rune
(86) International application number: PCT/SE1999/002331
(87) International publication number: WO 2000/041911

(56) References cited:
- SE-B- 466 252
- US-A- 4 157 797
- US-A- 4 341 415
- US-A- 4 949 931

## Description

### TECHNICAL FIELD

The present invention relates to a seating arrangement for a motor vehicle (1), comprising a number of seats which are arranged so that they can be moved between different mutual positions along rails on the vehicle floor.

### BACKGROUND TO THE INVENTION:

Motor vehicles which can be quickly and easily adapted to varying loading and transporting requirements are in ever increasing demand from modern customer groups. Such vehicles are referred to by popular terms such as mini-van, MPV (multi-purpose vehicle), SUV (sports utility vehicle), etc.

Vehicles of the abovementioned type are often provided with movable seats which can be arranged in a number of different configurations adapted to the special activities and areas of use. The seats are for this purpose secured to the vehicle floor via attachments which are more or less easy for the user to manipulate.

A problem with known solutions in this area is that the seats and other equipment secured to the floor can only be moved within the vehicle in a relatively limited number of ways. To achieve a considerable increase in the loading area of the vehicle, a number of seats therefore generally have to be released from the floor and lifted out of the vehicle, and further problems often arise when looking for a suitable place to store the seats which have been removed.

A seat arrangement according to the preamble of claim 1 is known from SE-B-466 252.

In addition, the weight of the seats is often not inconsiderable, for which reason some users have difficulties handling the seats.

### DESCRIPTION OF THE INVENTION:

The invention solves the above problems by making available a seating arrangement for a motor vehicle, comprising a number of seats which are arranged so that they can be moved between different mutual positions along at least two parallel rails extending in the longitudinal direction of the vehicle in the vehicle floor, the said seats each comprising a backrest part and a seat part and being slidably attached to the rails by means of coupling members via which the seats can be locked in a number of positions along the rails. The invention is characterized in that:
- the seat part of the seats is pivotably mounted in relation to the backrest part in such a way that it can assume a first, folded-down position and a second position in which it is folded up against the backrest part; and
- at least one rail extends essentially in the transverse direction of the vehicle, which transverse rail connects the said rails extending in the longitudinal direction of the vehicle to each other, in such a way that the seats can be moved, via the transverse rail, from engagement with one longitudinally extending rail to the other.

In a preferred embodiment of the invention, the seating arrangement comprises a driver's seat and at least three passenger seats, where - in a use position - a passenger seat is placed alongside the driver's seat and two passenger seats are placed behind the driver's seat, and the passenger seats - in a stowage position - are all placed alongside the driver's seat, with the seat parts in the folded-up position.

According to a preferred embodiment, in which the vehicle has, in the traditional manner, a driver's side located on one side of the vehicle and a passenger side located on the opposite side of the vehicle, rails extending in the longitudinal direction of the vehicle extend further forwards in the vehicle on the passenger side than on the driver's side.

In an advantageous embodiment of the invention, the seating arrangement comprises a driver's seat and at least three passenger seats, where - in a use position - a passenger seat is placed alongside the driver's seat and two passenger seats are placed alongside each other behind the driver's seat, and the two passenger seats placed behind the driver's seat are - in a stowage position - placed close behind the driver's seat and close behind the passenger seat placed alongside the driver's seat, with the seat parts in the folded-up position.

In a likewise advantageous embodiment of the invention, the seating arrangement comprises a driver's seat and at least three passenger seats, where a passenger seat is placed alongside the driver's seat and two passenger seats are placed alongside each other behind the driver's seat, and where the two passenger seats placed behind the driver's seat can be moved between a first position, in which they are secured respectively on one of the two parallel rails extending in the longitudinal direction of the vehicle, so that a space is defined between the two seats, and a second position, in which they are both secured along the transverse rail, immediately next to each other.

Preferably, two pairs of parallel rails extending in the longitudinal direction of the vehicle are arranged in the floor of the vehicle, each pair of rails being designed to cooperate with a seat's coupling member.

In addition, at least one pair of transverse rails is preferably arranged in the floor of the vehicle, the said pair of rails being designed to cooperate with a seat's coupling member.

In a preferred embodiment, the rails also have an essentially rectangular cross section.

Moreover, the rails also preferably have a slot which is open at the top and which is parallel with the rails and whose width is smaller than the width of the rails, in such a way that a partially open guide track is defined within the rails, for cooperation with the coupling members of the seats.

By virtue of the invention, the vehicle seats can be placed quickly and easily in a plurality of configurations adapted to different use situations, and the need to lift the seats out of the vehicle for separate stowage in a garage or the like, which applied in certain previously known solutions, is completely eliminated.

Other features and advantages of the invention will become evident from the following description of a preferred embodiment.

### BRIEF DESCRIPTION OF THE DRAWINGS:

The invention will be described below on the basis of an illustrative embodiment and with reference to the attached drawings, in which:
Fig. 1 shows a simplified perspective view of a seating arrangement according to the invention;
Fig. 2 shows a diagrammatic side view of a seat included in a seating arrangement according to the invention, comprising a seat part and a backrest part, and in which the seat part is in its folded-down position;
Fig. 3 shows the same seat as in Fig. 2, but with the seat folded up against the backrest part;
Fig. 4 shows a diagrammatic plan view of a motor vehicle whose floor is provided with rails according to a preferred embodiment of the seating arrangement according to the invention;
Fig. 5 shows a similar plan view to that in Fig. 4, where a driver's seat and three passenger seats according to the invention are secured in the rails in a preferred use position;
Fig. 6 shows a similar plan view to that in Figures 4 and 5, where the three passenger seats have been moved along the rails to a stowage position alongside the driver's seat, with the seat parts folded up;
Fig. 7 shows a diagrammatic perspective view of the stowage position already shown in Fig. 6;
Fig. 8 shows a plan view of the seating arrangement according to the invention, where the two passenger seats behind the driver's seat are placed in a stowage position close behind the driver's seat and close behind the passenger seat placed alongside the driver's seat, with the seat parts folded up;
Fig. 9 shows a diagrammatic plan view of the seating arrangement according to the invention, where the two passenger seats placed behind the driver's seat are folded forwards so that the rear sides of the backrest parts form a loading surface;
Fig. 10 shows a load-securing member intended to be secured to the rails in the seating arrangement according to the invention;
Fig. 11 shows a diagrammatic plan view of the seating arrangement according to the invention, where the two passenger seats placed behind the driver's seat are secured immediately next to each other along the transverse rail, which affords an improved forward view for the passengers in the back seats;
Fig. 12 shows a diagrammatic plan view of the seating arrangement according to the invention, where one of the back passenger seats has been changed to its folded-up position, and the front passenger seat has been moved backwards along the rails, for example to provide extra space for a child's seat (not shown); and
Fig. 13 shows a partial perspective view of a vehicle floor provided with rails according to the invention. The figure shows clearly how a transverse rail is joined to a rail extending in the longitudinal direction of the vehicle.

### DESCRIPTION OF A PREFERRED EMBODIMENT:

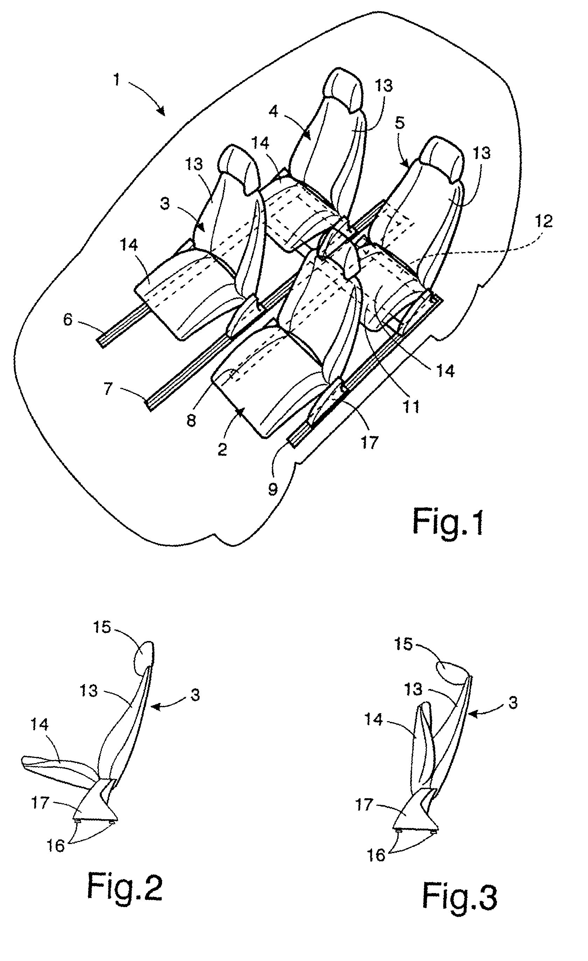

In Figure 1, reference number 1 generally designates a motor vehicle (simplified outline) provided with a seating arrangement according to a preferred embodiment of the invention.

In the example shown, the seating arrangement comprises a driver's seat 2 placed on the driver's side, a front passenger seat 3 placed alongside the driver's seat - on the so-called passenger side - and two back passenger seats 4, 5 placed behind the driver's seat 2.

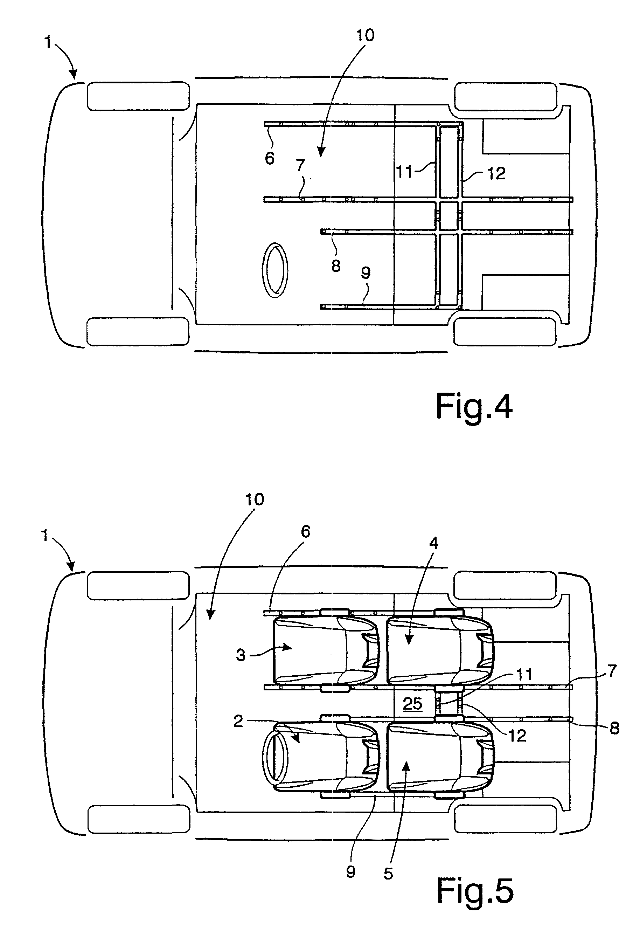

The seats 2, 3, 4, and 5 can be moved between different mutual positions along four parallel rails 6, 7, 8 and 9 which are recessed into the vehicle floor 10 and extend in the longitudinal direction of the vehicle 1. The rails 6, 7, 8, 9 are divided into two pairs, where a first pair 8, 9 extend along the driver's side of the vehicle 1 and a second pair 6, 7 extend along the passenger side. In Fig. 1, those parts of the rails concealed by the seats are indicated by broken lines. In Fig. 4, the seats have been removed so that the extent of the rails 6, 7, 8, 9 is clearer.

According to the invention, there are also two rails 11, 12 extending in the transverse direction of the vehicle 1. The parallel transverse rails 11, 12 connect the above-described longitudinal rails 6, 7, 8, 9 to each other, in such a way that the seats 2, 3, 4, 5 can be moved, via these transverse rails 11, 12, from engagement with one pair of longitudinal rails 8, 9 to the second pair of longitudinal rails 6, 7.

As can be seen from Figures 2 and 3, the seats 2, 3, 4, 5 each comprise a backrest part 13, a seat part 14 and a headrest 15. The seats 2, 3, 4, 5 are preferably of a lightweight type and can also be slidably secured to the rails 6, 7, 8, 9, 11, 12 by means of coupling members 16, via which the seats can be locked in a plurality of positions along the rails. The coupling members 16 are fixed on the underside of two base elements 17, to which the backrest part 13 and seat part 14 are also secured. The coupling members 16 are provided with locking members (not shown) with which they can be locked in a fixed position in relation to the rails. The seat part 14 of the seats 2, 3, 4, 5 can be pivoted in relation to the backrest part 13 in such a way that it can assume a first, folded-down position - as is shown in Fig. 2 - and a second position in which it is folded up against the backrest part, as is shown in Fig. 3. It will also be seen from Fig. 3 that the headrest 15 can be folded forwards to improve the rear view in the vehicle.

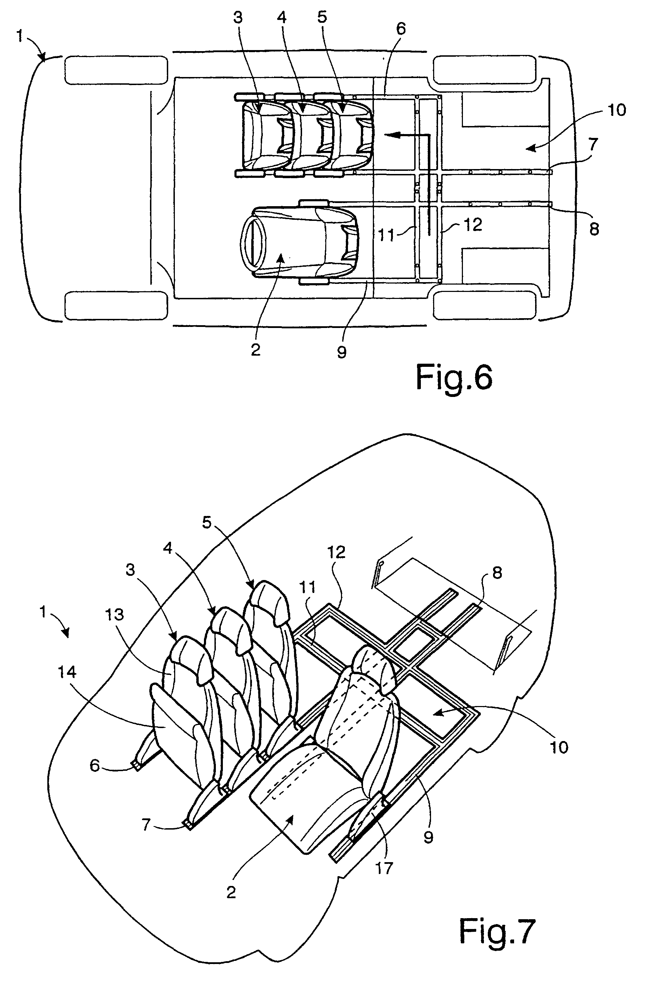

The seating configuration shown in Fig. 1 and in Fig. 4 is the normal use position for the vehicle, in which position a driver and three passengers can travel comfortably in the vehicle. However, if so required, the loading capacity of the vehicle can be considerably increased by means of the passenger seats 3, 4, 5 - in a stowage position - being stowed alongside the driver's seat 2, with the seat parts 14 folded up, as is shown in Figures 6 and 7. Conversion to the stowage position is simple to do by means of the seat part of the front passenger seat 3 first being folded up, after which the coupling members 16 are manipulated so that the seat 3 is released from its previously locked position alongside the driver's seat 2, and is then pushed forwards along the rails 6 and 7 to a forward stowage position in close proximity to the instrument panel (not shown ) of the vehicle 1. The seat part 14 of the rear passenger seat 4 is then folded up against the backrest part 13, after which the seat 4 is advanced in the same way along the rails 6 and 7 to a forward stowage position immediately behind the passenger seat 3 in front of it. Finally, the seat part 14 of the remaining passenger seat 5 (which is originally placed behind the driver's seat) is folded up against the backrest part 13, after which the seat 5 is first pushed to the right in the transverse direction of the vehicle along the transverse rails 11, 12 and then pushed forwards along the longitudinal rails 6 and 7 to an advanced stowage position immediately behind the passenger seat 4 in front. The backrest part 13 of the rearmost passenger seat 5 is essentially level with the backrest part 13 of the driver's seat 2 in the illustrated stowage position, as shown in Fig. 7. In the preferred embodiment of the invention shown, the longitudinal rails 6, 7 located on the passenger side are longer than corresponding rails 8, 9 on the driver's side, so that the stowed passenger seats 3, 4, 5 will have enough space alongside the driver's seat 2.

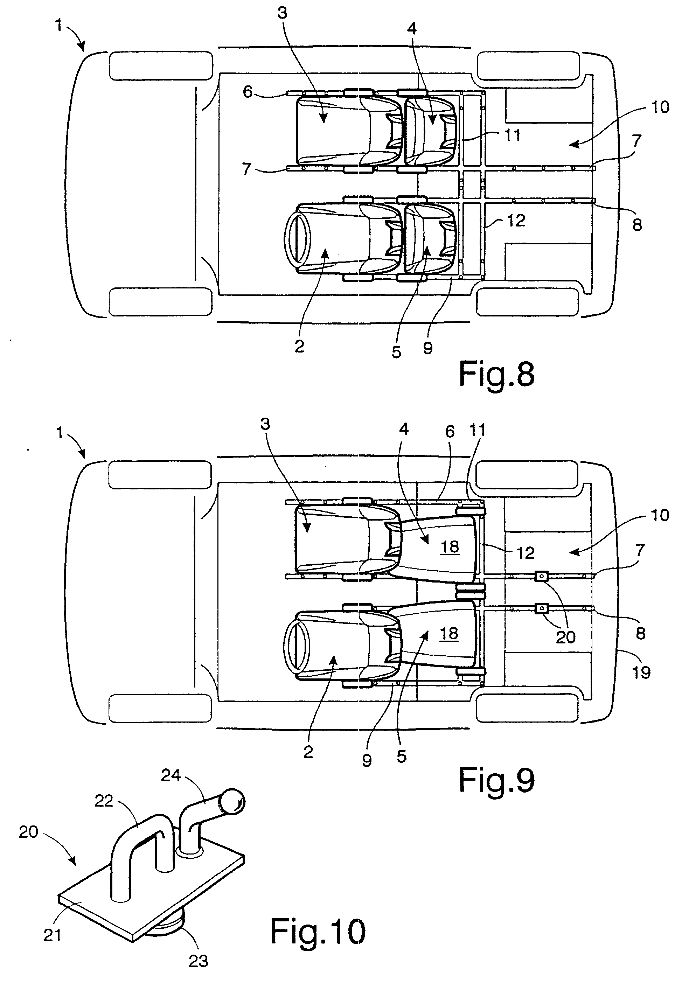

Fig. 8 shows a further stowage position according to the invention, in which the two passenger seats 4, 5 behind the driver's seat 2 are placed close behind the driver's seat 2 and, respectively, close behind the passenger seat 3 alongside the driver's seat 2 with the seat parts 14 folded up. By means of this stowage position, a passenger can thus travel in the vehicle 1 while the loading space is at the same time increased.

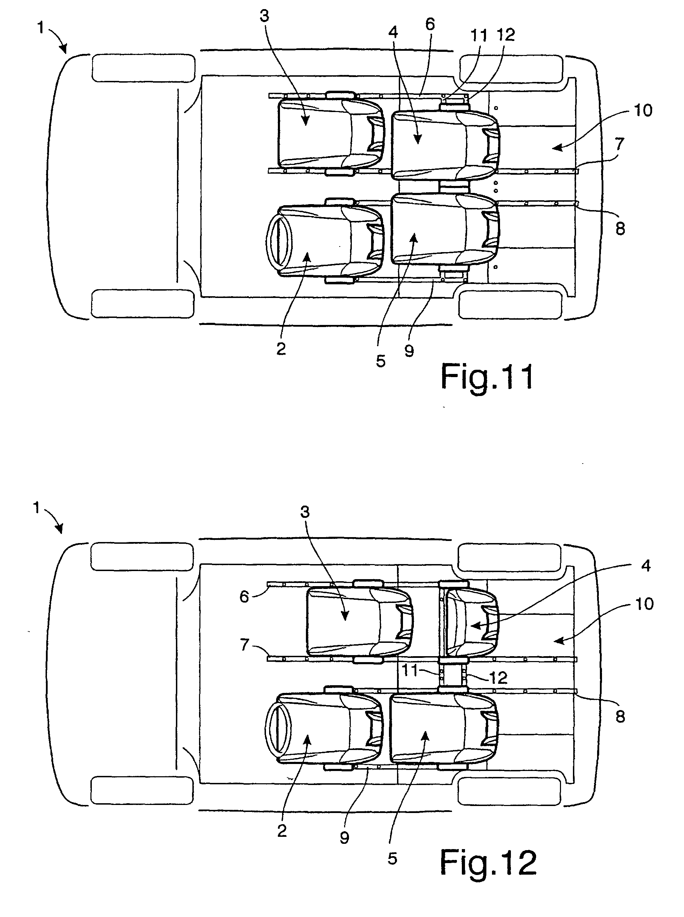

Fig. 9 shows how the two passenger seats 4, 5 placed behind the driver's seat 2 can alternatively be folded forwards so that the rear sides 18 of the backrest parts 13 form a loading surface. The passenger seat 3 alongside the driver's seat 2 can also be folded forwards in a corresponding manner, although this is not shown. Fig. 9 also shows that the two central longitudinal rails 7, 8 are continued to the rear edge 19 of the vehicle 1, where they can advantageously be used for securing displaceable load-securing members 20 intended for securing a load by cooperation with load-securing belts or load-securing nets (not shown). Such a load-securing member 20 can preferably be designed according to the example shown in Fig. 10. In this example, the load-securing member consists of a base plate 21 on which there are an eye 22, a coupling pin 23 for engagement with the rails 7, 8, and a locking arm 24 by means of which the load-securing member 20 can be locked to or released from the rails 7, 8. Such load-securing members 20 can also be secured at a number of other positions both along the longitudinal rails 6, 7, 8, 9 and along the transverse rails 11, 12.

Referring to Figures 5 and 11, the two passenger seats 4, 5 according to the invention, placed behind the driver's seat 2, can be moved between a first position, in which they are secured along each pair of longitudinal rails 6, 7 or 8, 7 so that a space 25 is defined between the two seats 4, 5 (as can be seen in Fig. 5), and a second position, in which they are both secured along the transverse rails 11, 12, immediately next to each other (as can be seen in Fig. 11). In the said second position, an improved forward view for the passengers in the back seats is afforded, while at the same time the positioning of the seats facilitates communication between the persons travelling in the vehicle.

In Fig. 12, the rear passenger seat 4 behind the front passenger seat 3 has been changed to its folded down position, where the front passenger seat 3 has been pushed backwards along the rails 6, 7 in order to provide extra space, for example, for a child seat (not shown).

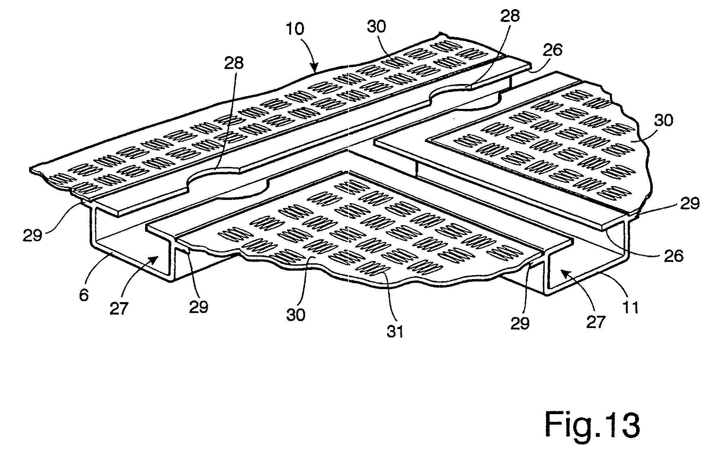

Fig. 13 shows part of the floor 10 of the vehicle 1. It will be seen from the figure that the rails (6, 11) have a rectangular cross section and a slot 26 which is open at the top and which is parallel to the rails and whose width is smaller than the width of the rails, in such a way that a partially open guide track 27 is defined within the rails, for cooperation with the coupling members 16 of the seats 2, 3, 4, 5 (not shown in the figure). Where two rails intersect, for instance as shown here between the longitudinal rail 6 and the transverse rail 11, the rails meet in such a way that their guide tracks 27 communicate with each other. In this way, the coupling members 16 of the seats 2, 3, 4, 5 can slide freely in the said guide tracks 27 from one rail 11 to the other rail 6. The rails 6, 11 are moreover provided with a number of widened openings 28, which are circles in the example shown, for passage of the coupling members 16 or coupling pins 23 of the seats 2, 3, 4, 5 on load-securing members 20 (see Fig.10).

As can also be seen from Fig. 13, the rails 6, 11 are recessed into the floor 10, for which reason the rails 6, 11 in this illustrative embodiment have two lateral projections 29 one on each side of each rail, which projections 29 form support surfaces for floor plates 30. The floor plates are advantageously embossed with a non-slip pattern 31 in order to increase the friction with the floor 10. The material of the rails is preferably aluminium, although steel can also be used. The material of the floor plates 30 is preferably aluminium or plastic. Alternatively, floor plates made of aluminium can be covered with a wear-resistant, friction-enhancing rubber material.

The invention is not limited to the illustrative embodiments described above and shown in the drawings, but can be freely varied within the scope of the attached patent claims. For example, the seats 2, 3, 4, 5 can be designed to run on just a single rail instead of the two shown in the above example. The coupling members 16 can be provided, for example, with rollers for facilitating the movements of the seats. Moreover, the number of seats can of course be greater than that shown, for example six, eight, or an odd number, such as five, or seven, in which cases the above-described stowage positions are assumed in accordance with the principle of the invention. Moreover, the seats can alternatively be arranged in a greater number of parallel rows - running in the longitudinal direction of the vehicle - than the two rows shown in the figures. For example, a central, third row of seats can be arranged between the two rows shown. The stowage position shown in Figures 6 and 7 in this case entails the stowed passenger seats being arranged in two rows alongside the driver's seat 2.

## Claims

1. Seating arrangement for a motor vehicle (1), comprising a number of seats (2, 3, 4, 5) which are arranged so that they can be moved between different mutual positions along at least two parallel rails (6, 7, 8, 9) extending in the longitudinal direction of the vehicle (1) in the vehicle floor (10), the said seats (2, 3, 4, 5) each comprising a backrest part (13) and a seat part (14) and being slidably attached to the rails (6, 7, 8, 9, 11, 12) by means of coupling members (16) via which the seats (2, 3, 4, 5) can be locked in a number of positions along the rails,
whereby the seat part (14) of the seats (2, 3, 4, 5) is pivotably mounted in relation to the backrest part (13) in such a way that it can assume a first, folded-down position and a second position in which it is folded up against the backrest part (13); **characterized in that**:
- at least one rail (11, 12) extends essentially in the transverse direction of the vehicle (1), which transverse rail (11, 12) connects the said rails (6, 7, 8, 9) extending in the longitudinal direction of the vehicle (1) to each other, in such a way that the seats (2, 3, 4, 5) can be moved, via the transverse rail (11, 12), from engagement with one longitudinally extending rail (8, 9) to the other (6, 7).

2. Seating arrangement according to Patent Claim 1, comprising a driver's seat (2) and at least three passenger seats (3, 4, 5) where - in a use position - a passenger seat (3) is placed alongside the driver's seat (2) and two passenger seats (4, 5) are placed behind the driver's seat (2), **characterized in that** the passenger seats (3, 4, 5) - in a stowage position - are all placed alongside the driver's seat (2), with the seat parts (14) in the folded-up position.

3. Seating arrangement according to Patent Claim 1 or 2, with a driver's side located on one side of the vehicle (1) and a passenger side located on the opposite side of the vehicle, **characterized in that** rails (6, 7, 8, 9) extending in the longitudinal direction of the vehicle (1) extend further forwards in the vehicle (1) on the passenger side than on the driver's side.

4. Seating arrangement according to Patent Claim 1, comprising a driver's seat (2) and at least three passenger seats (3, 4, 5) where - in a use position - a passenger seat (3) is placed alongside the driver's seat (2) and two passenger seats (4, 5) are placed alongside each other behind the driver's seat (2), **characterized in that** the two passenger seats (4, 5) placed behind the driver's seat (2) are - in a stowage position - placed close behind the driver's seat (2) and, respectively, close behind the passenger seat (3) placed alongside the driver's seat (2) with the seat parts (14) in the folded-up position.

5. Seating arrangement according to Patent Claim 1, comprising a driver's seat (2) and at least three passenger seats (3, 4, 5), where a passenger seat (3) is placed alongside the driver's seat (2) and two passenger seats (4, 5) are placed alongside each other behind the driver's seat (2), **characterized in that** the two passenger seats (4, 5) placed behind the driver's seat (2) can be moved between a first position, in which they are secured respectively on one of the two parallel rails (6, 7, 8, 9) extending in the longitudinal direction of the vehicle (1), so that a space (25) is defined between the two seats (4, 5), and a second position, in which they are both secured along the transverse rail (11, 12), immediately next to each other.

6. Seating arrangement according to one or more of the preceding patent claims, **characterized in that** two pairs of parallel rails (6, 7, 8, 9) extending in the longitudinal direction of the vehicle (1) are arranged in the floor (10) of the vehicle (1), each pair (6, 7 and 8, 9) of rails being designed to cooperate with a seat's coupling member (16).

7. Seating arrangement according to one or more of the preceding patent claims, **characterized in that** at least one pair of transverse rails (11, 12) are arranged in the floor (10) of the vehicle (1), the said pair of rails (11, 12) being designed to cooperate with a seat's coupling member (16).

8. Seating arrangement according to one or more of the preceding patent claims, **characterized in that** the rails (6, 7, 8, 9, 11, 12) have an essentially rectangular cross section.

9. Seating arrangement according to Patent Claim 7, **characterized in that** the rails (6, 7, 8, 9, 11, 12) have a slot (26) which is open at the top and which is parallel with the rails and whose width is smaller than the width of the rails, in such a way that a partially open guide track (27) is defined within the rails, for cooperation with the coupling members (16) of the seats (2, 3, 4, 5).

## Patentansprüche

1. Sitzanordnung für ein Kraftfahrzeug (1) mit einer Anzahl an Sitzen (2, 3, 4, 5), welche derart angeordnet sind, dass sie zwischen verschiedenen wechselseitigen Stellungen entlang wenigstens zwei paralleler Schienen (6, 7, 8, 9), welche sich in der Längsrichtung des Kraftfahrzeuges (1) in dem Kraftfahrzeugboden (10) erstrecken, verschiebbar sind,
wobei die Sitze (2, 3, 4, 5) jeweils einen Rückenlehnenabschnitt (13) und einen Sitzabschnitt (14) aufweisen und gleitend verschiebbar an den Schienen (6, 7, 8, 9, 11, 12) mittels Verbindungsteilen (16) befestigt sind, über welche die Sitze (2, 3, 4, 5) in einer Vielzahl an Stellungen entlang den Schienen verriegelbar sind;
wobei der Sitzabschnitt (14) der Sitze (2, 3, 4, 5) schwenkbar in Bezug auf den Rückenlehnenabschnitt (13) auf eine derartige Weise montiert ist, dass er eine erste heruntergefaltete Stellung und eine zweite Stellung einnehmen kann, in welcher er gegen den Rücklehnenabschnitt (13) gefaltet ist;
**dadurch gekennzeichnet,**
**dass** sich wenigstens eine Schiene (11, 12) im wesentlichen in der Querrichtung des Kraftfahrzeuges (1) erstreckt, wobei die quer verlaufende Schiene (11, 12) die Schienen (6, 7, 8, 9), welche sich in Längsrichtung des Kraftfahrzeuges (1) erstrecken, miteinander derart verbindet, dass die Sitze (2, 3, 4, 5) über die in Querrichtung verlaufende Schiene (11, 12) von einem Eingriff mit der einen sich in Längsrichtung erstreckenden Schiene (8, 9) in einem Eingriff mit der anderen (6, 7) bewegt werden können.

2. Sitzanordnung nach Anspruch 1, mit einem Fahrersitz (2) und wenigstens drei Beifahrersitzen (3, 4, 5), wobei in einer Gebrauchsstellung ein Beifahrersitz (3) neben dem Fahrersitz (2) angeordnet ist und zwei Beifahrersitze (4, 5) hinter dem Fahrersitz (2) angeordnet sind, **dadurch gekennzeichnet, dass** die Beifahrersitze (3, 4, 5) in einer Verstaustellung alle neben dem Fahrersitz (2) angeordnet sind, wobei sich die Sitzabschnitte (14) in der hochgefalteten Stellung befinden.

3. Sitzanordnung nach Anspruch 1 oder 2, wobei eine Fahrerseite an einer Seite des Kraftfahrzeuges (1) angeordnet ist und eine Beifahrerseite an der gegenüberliegenden Seite des Kraftfahrzeuges (1) angeordnet ist, **dadurch gekennzeichnet, dass** sich die Schienen (6, 7, 8, 9), welche sich in Längsrichtung des Kraftfahrzeuges (1) erstrecken, weiter in Vorwärtsrichtung des Kraftfahrzeuges (1) auf der Beifahrerseite als auf der Fahrerseite erstrecken.

4. Sitzanordnung nach Anspruch 1 mit einem Fahrersitz (2) und wenigstens drei Beifahrersitzen (3, 4, 5), wobei in einer Gebrauchsstellung ein Beifahrersitz (3) neben dem Fahrersitz (2) angeordnet ist und zwei Beifahrersitze (4, 5) nebeneinander hinter dem Fahrersitz (2) angeordnet sind, **dadurch gekennzeichnet, dass** die beiden hinter dem Fahrersitz (2) angeordneten Beifahrersitze (4, 5) in einer Verstaustellung nahe hinter dem Fahrersitz (2) angeordnet sind und jeweils nahe hinter dem Beifahrersitz (3) angeordnet sind, welcher sich neben dem Fahrersitz (2) befindet, wobei sich die Sitzabschnitte (14) in der hochgefalteten Stellung befinden.

5. Sitzanordnung nach Anspruch 1 mit einem Fahrersitz (2) und wenigstens drei Beifahrersitzen (3, 4, 5), wobei ein Beifahrersitz (3) neben dem Fahrersitz (2) angeordnet ist und zwei Beifahrersitze (4, 5) nebeneinander hinter dem Fahrersitz (2) angeordnet sind, **dadurch gekennzeichnet, dass** die beiden hinter dem Fahrersitz (2) angeordneten Beifahrersitze (4, 5) zwischen einer ersten Stellung, in welcher sie jeweils auf eine der beiden parallelen Schienen (6, 7, 8, 9), die sich in Längsrichtung des Kraftfahrzeuges (1) derart erstrecken, dass ein Freibereich (25) zwischen den beiden Sitzen (4, 5) definiert ist, befestigt sind, und einer zweiten Stellung, in welcher sie beide entlang der in Querrichtung verlaufenden Schiene (11, 12) unmittelbar nebeneinander bewegbar sind.

6. Sitzanordnung nach wenigstens einem der vorhergehenden Ansprüche, **dadurch gekennzeichnet, dass** zwei Paare an parallelen Schienen (6, 7, 8, 9), die sich in Längsrichtung des Kraftfahrzeuges (1) erstrecken, in dem Boden des Kraftfahrzeuges (1) angeordnet sind, wobei jedes Paar (6, 7 und 8, 9) der Schienen ausgebildet ist, um mit einem Verbindungsteil (16) des Sitzes zusammen zu passen.

7. Sitzanordnung nach wenigstens einem der vorhergehenden Ansprüche, **dadurch gekennzeichnet, dass** wenigstens ein Paar an in Querrichtung verlaufenden Schienen (11, 12) in dem Boden des Kraftfahrzeuges (1) angeordnet ist, wobei das Paar an Schienen (11, 12) ausgebildet ist, um mit einem Verbindungsteil (16) des Sitzes zusammen zu passen.

8. Sitzanordnung nach wenigstens einem der vorhergehenden Ansprüche, **dadurch gekennzeichnet, dass** die Schienen (6, 7, 8, 9, 11, 12) einen im wesentlichen rechteckigen Querschnitt aufweisen.

9. Sitzanordnung nach Anspruch 7, **dadurch gekennzeichnet, dass** die Schienen (6, 7, 8, 9, 11, 12) einen Schlitz (26) aufweisen, welcher an der Oberseite offen ist und welcher parallel zu den Schienen verläuft und dessen Breite derart kleiner ist als die Breite der Schienen, dass eine teilweise offene Führungsbahn (27) innerhalb der Schienen für ein Zusammenpassen mit den Verbindungsteilen (16) der Sitze (2, 3, 4, 5) definiert ist.

## Revendications

1. Agencement de sièges pour un véhicule à moteur (1), comportant plusieurs sièges (2, 3, 4, 5) qui sont agencés de sorte qu'ils peuvent être déplacés entre différentes positions mutuelles le long d'au moins deux rails parallèles (6, 7, 8, 9) s'étendant dans la direction longitudinale du véhicule (1) dans le plancher de véhicule (10), lesdits sièges (2, 3, 4, 5) comportant chacun une partie formant dossier (13) et une partie formant siège (14) et étant reliés de manière coulissante aux rails (6, 7, 8, 9, 11, 12) par l'intermédiaire d'éléments de liaison (16) via lesquels les sièges (2, 3, 4, 5) peuvent être bloqués dans plusieurs positions le long des rails, de sorte que la partie formant siège (14) des sièges (2, 3, 4, 5) est montée de manière pivotante par rapport à la partie formant dossier (13) de telle sorte qu'elle peut prendre une première position rabattue vers le bas et une seconde position dans laquelle elle est rabattue vers le haut contre la partie formant dossier (13),
**caractérisé en ce qu'**au moins un rail (11, 12) s'étend essentiellement dans la direction transversale du véhicule (1), lequel rail transversal (11, 12) relie lesdits rails (6, 7, 8, 9) s'étendant dans la direction longitudinale du véhicule (1) les uns aux autres, de telle sorte que les sièges (2, 3, 4, 5) peuvent être déplacés, via le rail transversal (11, 12), depuis un contact avec un rail longitudinal s'étendant longitudinalement (8, 9) jusqu'à l'autre (6, 7).

2. Agencement de sièges selon la revendication 1, comportant un siège conducteur (2) et au moins trois sièges passagers (3, 4, 5) dans lequel - dans une position d'utilisation - un siège passager (3) est placé à côté du siège conducteur (2) et deux sièges passagers (4, 5) sont placés derrière le siège conducteur (2), **caractérisé en ce que** les sièges passagers (3, 4, 5) - dans une position de rangement - sont tous placés à côté du siège conducteur (2), les parties formant siège (14) étant en position rabattue vers le haut.

3. Agencement de sièges selon la revendication 1 ou 2, un côté conducteur étant positionné d'un côté du véhicule (1) et un côté passager étant positionné du côté opposé du véhicule, **caractérisé en ce que** les rails (6, 7, 8, 9) s'étendant dans la direction longitudinale du véhicule (1) s'étendent dans le véhicule (1) de manière plus avancée du côté passager que du côté conducteur.

4. Agencement de sièges selon la revendication 1, comportant un siège conducteur (2) et au moins trois sièges passagers (3, 4, 5) dans lequel - dans une position d'utilisation - un siège passager (3) est placé à côté du siège conducteur (2) et deux sièges passagers (4, 5) sont placés l'un à côté de l'autre derrière le siège conducteur (2), **caractérisé en ce que** les deux sièges passagers (4, 5) placés derrière le siège conducteur (2) sont - dans une position de rangement - placés de manière rapprochée derrière le siège conducteur (2) et, respectivement, de manière rapprochée derrière le siège passager (3) placé à côté du siège conducteur (2), les parties formant siège (14) étant en position rabattue vers le haut.

5. Agencement de sièges selon la revendication 1, comportant un siège conducteur (2) et au moins trois sièges passagers (3, 4, 5), dans lequel un siège passager (3) est placé à côté du siège conducteur (2) et deux sièges passagers (4, 5) sont placés l'un à côté de l'autre derrière le siège conducteur (2), **caractérisé en ce que** les deux sièges passagers (4, 5) placés derrière le siège conducteur (2) peuvent être déplacés entre une première position, dans laquelle ils sont fixés respectivement sur l'un des deux rails parallèles (6, 7, 8, 9) s'étendant dans la direction longitudinale du véhicule (1), de sorte qu'un espace (25) est défini entre les deux sièges (4, 5), et une seconde position, dans laquelle ils sont tous les deux fixés le long du rail transversal (11, 12), directement à côté l'un de l'autre.

6. Agencement de sièges selon une ou plusieurs des revendications précédentes, **caractérisé en ce que** deux paires de rails parallèles (6, 7, 8, 9) s'étendant dans la direction longitudinale du véhicule (1) sont agencées dans le plancher (10) du véhicule (1), chaque paire (6, 7 et 8, 9) de rails étant conçue pour coopérer avec un élément de liaison de siège (16).

7. Agencement de sièges selon une ou plusieurs des revendications précédentes, **caractérisé en ce qu'**au moins une paire de rails transversaux (11, 12) est agencée dans le plancher (10) du véhicule (1), ladite paire de rails (11, 12) étant conçue pour coopérer avec un élément de liaison de siège (16).

8. Agencement de sièges selon une ou plusieurs des revendications précédentes, **caractérisé en ce que** les rails (6, 7, 8, 9, 11, 12) ont une section transversale essentiellement rectangulaire.

9. Agencement de sièges selon la revendication 7, **caractérisé en ce que** les rails (6, 7, 8, 9, 11, 12) ont une encoche (26) qui est ouverte sur la partie supérieure et qui est parallèle aux rails et dont la largeur est plus petite que la largeur des rails, de telle sorte qu'une piste de guidage partiellement ouverte (27) est définie à l'intérieur des rails, pour assurer une coopération avec les éléments de liaison (16) des sièges (2, 3, 4, 5).
